# EUROPEAN PATENT APPLICATION

(11) **EP 0 712 573 A1**
(43) Date of publication of application: **22.05.1996**
(21) Application number: 95118165.0
(22) Date of filing: 17.11.1995
(51) Int. Cl.: A01K 89/01

(54) **Spinning reel**

(30) Priority: 18.11.1994 JP 284919/94; 28.04.1995 JP 129717/95
(71) Applicant: RYOBI LTD., Fuchu-shi, Hiroshima-ken (JP)
(72) Inventor: Aoki, Atsuhito, c/o Ryobi Limited, Hiroshima-ken (JP)
(74) Representative: Frohwitter, Bernhard, Dipl.-Ing.

(57) **Abstract**

A spinning reel for fishing comprises a reel body (1) casing, a rotational frame (5) member rotatably provided for the reel body (1) casing, a spool shaft (10) provided for the reel body casing to be movable in a rotation axis direction of the rotational frame (5) member, a spool (11) mounted to one end portion of the spool shaft (10) and a handle means operatively connected to the rotational frame member capable of rotating the same. An oscillator gear (7) is provided for the reel body (1) casing to be rotatable by the handle (14) means and a rotational member (8) is mounted to the oscillator gear (7) to be rotatable. The rotational member (8) is formed with a first projection (8a) engageable with a cam groove (1b) formed to an inner surface of the reel body casing and a second projection (8b) engageable with an oscillator (9) secured to another end portion of the spool shaft.

## Description

### BACKGROUND OF THE INVENTION

The present invention relates to a spinning reel, particularly for a fishing reel, provided with a mechanism smoothly movable or slidable in an axial direction of a spool shaft.

In general, there is widely known a spinning reel for winding up a fishing line by rotating a rotational frame of the reel and moving a spool reciprocally in a rotation axis direction of the rotational frame.

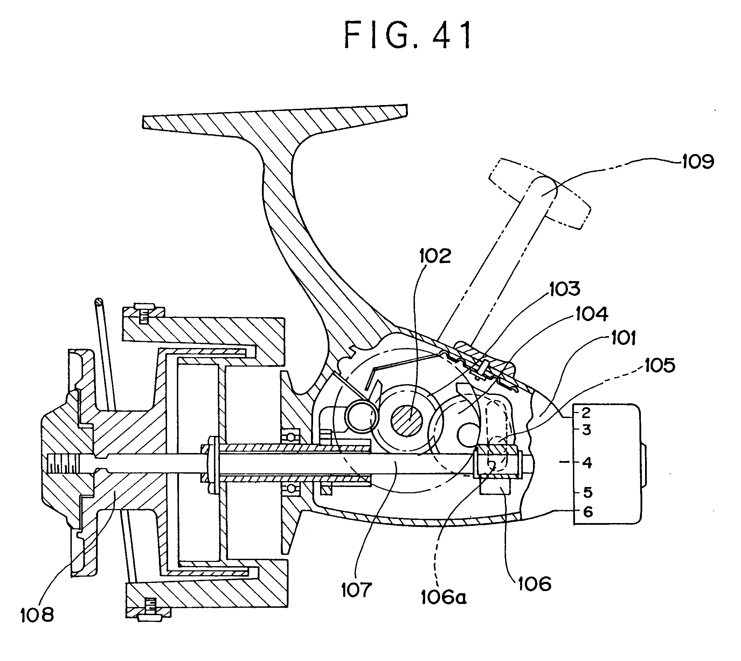

FIG. 41 shows one example of a conventional spinning reel, in which reference numeral 101 denotes a body casing, i.e. reel body, and a handle shaft 102 is mounted to the body casing 101 to be rotatable. A coupling gear 103 is secured to the handle shaft 102, and the coupling gear 103 is engaged with an oscillator gear 104 rotatably mounted to the body casing 101. A pin 105 engaged with a slot 106a formed to an oscillator 106 is provided for the oscillator gear 104. Secured to the oscillator 106 is a spool shaft 108 having a front end to which a spool 108 is mounted.

When the spinning reel of the structure described above is operated by gripping and rotating a handle lever 109 to rotate the handle shaft 102, the coupling gear 103 mounted to the handle shaft 102 is also rotated, thus the oscillator gear 104 being rotated, thereby moving the pin 105 along the slot 106a. In this manner, the oscillator 106 and, hence, the spool shaft 107 is moved reciprocally in a longitudinal direction, i.e. bilateral direction in Fig. 41.

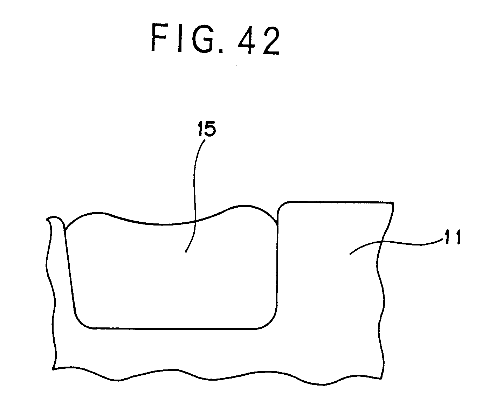

However, according to the above prior art structure, the spool shaft does not perform a uniform reciprocal motion and, under such state, when the fishing line is wound up, the fishing line is not uniformly wound up around the spool as shown in Fig. 42, and will be relaxed.

In order to obviate such defect, a prior art further provides a structure for making almost uniform the reciprocal motion of the spool shaft such as disclosed in the Japanese Patent Publication No. HEI 2-60295.

Fig. 43 shows a structure of a spinning reel of this publication, in which reference numeral 201 denotes a body casing to which a handle shaft 202 is mounted to be rotatable. Secured to the handle shaft 202 is a coupling gear 203 which is engaged with an oscillator gear 204 mounted to the body casing 201 to be rotatable. The oscillator gear 204 is formed with a slot 204a extending in the radial direction thereof, and a follow-up pin 205 penetrates the slot 204a. The follow-up pin 205 has one end engaged with a cam groove 201a formed to the body casing 201 and has another end engaged with a slot 206a of an oscillator 206. A spool 208 is mounted to one end of a spool shaft 207. The cam groove 201a has a shape enabling the spool 208 to perform almost uniform motion.

When the handle shaft 202 is driven and rotated by a handle lever 209, the coupling gear 203 is rotated and hence the oscillator gear 204 is also rotated. Upon the rotation of the oscillator gear 204, the follow-up pin 205 penetrating the slot 204a moves along the cam groove 201a and the slot 206a. In this manner, the oscillator 206 and the spool 208 is moved reciprocally in the bilateral direction as viewed in FIG. 42 at substantially the uniform motion speed.

However, even in the above structure, there is provided the following problems. That is, according to the above structure, since the follow-up pin 205 inclines during its movement, the spool is not moved smoothly. The inclining motion of the follow-up pin 205 will cause wearing of the slots, the cam groove and the follow-up pin itself, thus being not advantageous. Furthermore, when an impact is applied in the spool axis direction by a falling down shock of the spinning reel, for example, the slots, the cam groove and the follow-up pin will easily damaged, also providing a problem. The inclining motion of the follow-up pin 205 will not cause a smooth rotation of the rotational frame of the spinning reel. Still furthermore, since the follow-up pin 205 has to be disposed inside tooth bottom of the oscillator gear 206, it is difficult to make large strokes of the oscillator and the spool.

### SUMMARY OF THE INVENTION

An object of the present invention is to substantially eliminate defects or drawbacks encountered in the prior art described above and to provide a spinning reel, particularly for fishing, capable of performing a uniform and smooth motion of a spool of the spinning reel om its longitudinal direction and being improved in its durability.

These and other objects can be achieved according to the present invention by providing, in one aspect, a spinning reel which comprises a reel body casing, a rotational frame member rotatably provided for the reel body casing, a spool shaft provided for the reel body casing to be movable in a rotation axis direction of the rotational frame member, a spool mounted to one end portion of the spool shaft and a handle means operatively connected to the rotational frame member capable of rotating the same, the spinning reel being characterized in that an oscillator gear is provided for the reel body casing to be rotated by the handle means, a rotational member is mounted to the oscillator gear to be rotatable, and the rotational member is formed with a first projection engageable with a cam groove formed to an inner surface of the reel body casing and a second projection engageable with the oscillator means secured to another end portion of the spool shaft.

In preferred examples in this aspect, the first and second projections are formed on opposing surfaces of the rotational member, respectively, shifted in angles from each other.

The oscillator means is provided with a slot with which the second projection is engageable. The oscillator gear and the rotational member is operatively connected through a link mechanism. The oscillator gear is mounted to an oscillator gear shaft secured to the reel body casing, the oscillator gear shaft being provided with a flanged portion in a direction perpendicular to an axial direction of the oscillator gear shaft.

The rotational member is provided with a body portion and a flanged portion and the first projection is formed to the flanged portion. The flanged portion is engagable with a recessed portion formed to the oscillator gear. A plate member is secured to the rotational member for preventing the rotational member from falling down from the oscillator gear. The plate member may be secured to the oscillator gear for preventing the rotational member from falling down from the oscillator gear.

A plate member having a diameter larger than that of the body portion of the rotational member is secured thereto and the plate member is positioned in the recessed portion of the oscillator gear.

A reel body casing is integrally formed with a boss portion to which the oscillator gear is rotatably mounted and a metallic pin is fitted to the boss portion, and the reel casing body is formed of a resin material.

At least one of the first and second projections has a portion positioned outwardly apart from a tooth bottom circle of the oscillator gear.

In another aspect of the present invention, there is provided a spinning reel which comprises a reel body casing, a rotational frame member rotatably provided for the reel body casing, a spool shaft provided for the reel body casing to be movable in a rotation axis direction of the rotational frame member, a spool mounted to one end portion of the spool shaft and a handle means operatively connected to the rotational frame member capable of rotating the same, the spinning reel being characterized in that an oscillator gear is mounted to an oscillator gear shaft to be rotatable in association with a rotation of the handle means, an oscillator is mounted to the spool shaft, a rotational member in shape of plate overlapped with the oscillator gear and the oscillator to be slidable together, the rotational member being provided with a slot into which the oscillator gear shaft is inserted and formed with a first projection and a second projection, respectively, at both surfaces of the rotational member, the oscillator gear being provided with a slot into which either one of the first and second projections is inserted, the reel body casing is formed with a closed curve groove which surrounds the oscillator gear shaft and into which a front end of the first projection is inserted, and the oscillator is formed with a vertical groove into which a front end of the second projection is inserted.

The oscillator has a plate shape having a flat surface facing the rotational member and the vertical groove is formed to the flat surface of the oscillator. The slot is formed to the oscillator gear so as to extend radially from a portion near the oscillator gear shaft. The first and second projections are formed on opposing surfaces of the rotational member, respectively, shifted in angles from each other.

The rotational member is a disc provided with a slot at its central portion, the first and second projections are round boss pins, and the first projection is positioned on a line extension of a longitudinal axis of the slot formed to the disc and the second projection is positioned on a line formed by rotating the longitudinal axis about the oscillator gear shaft by a predetermined angle. A small pin is formed on the oscillator gear shaft at a portion eccentric therefrom, the small pin being engaged with the slot formed to the rotational member.

In a further aspect of the present invention, there is provided a spinning reel which comprises a reel body casing, a rotational frame member rotatably provided for the reel body casing, a spool shaft provided for the reel body casing to be movable in a rotation axis direction of the rotational frame member, a spool mounted to one end portion of the spool shaft and a handle means operatively connected to the rotational frame member capable of rotating the same, the spinning reel being characterized in that an oscillator gear is mounted to an oscillator gear shaft to be rotatable in association with a rotation of the handle means, an oscillator is mounted to the spool shaft, a rotational member in shape of plate overlapped with the oscillator gear and the oscillator to be slidable together, the rotational member being formed with a first projection and a second projection, respectively, at both surfaces of the rotational member, a slot into which the first projection is inserted is formed to the oscillator gear, and a third projection is formed to either one of the rotational member or the oscillator gear and a slot to which the third projection is inserted is formed to another one of the rotational member or the oscillator gear, the reel body casing is formed with a closed curve groove which surrounds the oscillator gear shaft and into which a front end of the first projection is inserted, and the oscillator is formed with a vertical groove into which a front end of the second projection is inserted.

In a still further aspect of the present invention, there is provided a spinning reel which comprises a reel body casing, a rotational frame member rotatably provided for the reel body casing, a spool shaft provided for the reel body casing to be movable in a rotation axis direction of the rotational frame member, a spool mounted to one end portion of the spool shaft and a handle means operatively connected to the rotational frame member capable of rotating the same, the spinning reel being characterized in that an oscillator gear is mounted to an oscillator gear shaft to be rotatable in association with a rotation of the handle means, an oscillator is mounted to the spool shaft, a rotational member in shape of plate overlapped with the oscillator gear and the oscillator to be slidable together, the rotational member being formed with a first projection and a second projection, respectively, at both surfaces of the rotational member, a slot into which the first projection is inserted is formed to the oscillator gear, and a guide surface is formed to either one of the rotational member or the oscillator gear and a surface to be guided is formed to another one of the rotational member or the oscillator gear to be engageable with the guide surface, the reel body casing is formed with a closed curve groove which surrounds the oscillator gear shaft and into which a front end of the first projection is inserted, and the oscillator is formed with a vertical groove into which a front end of the second projection is inserted.

According to the characters or structures of the present invention described above, in one aspect, when the handle lever is rotated, the oscillator gear is then rotated and the rotational member is hence rotated about the rotation center of the oscillator gear. Through this rotation, since the second projection is engaged with the slot of the oscillator means, the oscillator is reciprocally moved. According to this reciprocal motion of the oscillator, the spool shaft mounted with the spool at its one end is also reciprocally moved along its axial direction. The first projection of the rotational member is engaged with the cam groove, so that the revolution of the rotational member is itself limited, thereby performing the uniform reciprocal motion of the oscillator, and the fishing line, for example, can be uniformly wound up around the spool.

Accordingly, since the rotation of the oscillator gear is transferred to the oscillator through the projection formed to the rotational member, the rotational member is not inclined, thus reducing the backlash thereof during the axial movement of the spool and smoothly rotating the rotational frame of the reel body casing. Furthermore, since the respective members or elements are always engaged with each other in normal places, the wearing of these members can be effectively eliminated, thus improving the durability of the spinning reel. The formation of the flanged portion contributes the angular accuracy of the oscillator gear shaft. The strength of the oscillator gear shaft, and hence, the durability thereof, may be improved by forming the oscillator gear shaft with a material different from that of the reel body casing. The rotational member can be prevented from falling down from the oscillator gear and the backlash thereof can be also prevented effectively.

According to another aspect of the present invention of the characters described above, when the handle lever is rotated, the oscillator gear is then rotated. In an example of the arrangement in which the rotational member is disposed between the oscillator gear and the oscillator, the first projection of the rotational member penetrates the slot of the oscillator gear and is engaged with the cam groove and the oscillator gear shaft is engaged with the slot of the rotational member, so that the rotational member performs a swing motion corresponding to the closed curve contour of the cam groove about the oscillator gear shaft in accordance with the rotation of the oscillator gear. On the other hand, in an example of the arrangement in which the rotational member is disposed between the oscillator gear and the reel body casing, the second projection of the rotational member penetrate the slot of the oscillator gear and is engaged with the vertical groove of the oscillator, thereby also performing the swing motion. Since the second projection is fitted with the vertical groove of the oscillator, the oscillator is reciprocally moved along the longitudinal direction of the spool shaft in accordance with the motion of the second projection and the spool mounted to the front end portion of the spool shaft also performs the reciprocal motion in the front portion of the reel body casing.

According to the above arrangement, in addition to substantially the same effects of the above one aspect, since the rotational member is arranged in a manner overlapped with the oscillator gear and the oscillator, the first and second projections are hardly inclined. Furthermore, since it is not always necessary to from the cam groove in a manner facing the spool shaft, various arrangements of the spinning reel components may be adapted. Since the second projection can be formed on the side of the tooth bottom circle of the oscillator gear, the strokes of the oscillator and the spool can be made large.

According to the further aspect of the present invention of the character described above, when the handle lever is rotated, the oscillator gear is then rotated. The first projection of the rotational member penetrates the slot of the oscillator gear and is engaged with the cam groove and the third projection is engaged with the slot formed to one of the rotational member and the oscillator gear. According to such arrangement, the rotational member performs a swing motion corresponding to the closed curve contour of the cam groove about the oscillator gear shaft in accordance with the rotation of the oscillator gear. Further, the second projection of the rotational member is engaged with the vertical groove of the oscillator, so that the oscillator also performs the reciprocal motion together with the spool shaft along the longitudinal direction of the spool shaft in accordance with the motion of the second projection, and the spool mounted to the front end portion of the spool shaft also performs the reciprocal motion in the front portion of the reel body casing.

In the still further aspect of the present invention of the character described above, when the handle lever is rotated, the oscillator gear is then rotated. The first projection of the rotational member penetrates the slot of the oscillator gear and is engaged with the cam groove and the rotational member is engaged with the oscillator gear through the engagement of the guide surfaces and the surfaces to be guided, so that, in accordance with the rotation of the oscillator gear, the rotational member performs a swing motion corresponding to the closed curve contour of the cam groove about the oscillator gear shaft in accordance with the rotation of the oscillator gear. Further, since the second projection of the rotational member is engaged with the vertical groove of the oscillator, the oscillator also performs the reciprocal motion together with the spool shaft moved along the longitudinal direction of the spool shaft in accordance with the motion of the second projection, and the spool mounted to the front end portion of the spool shaft also performs the reciprocal motion in the front portion of the reel body casing.

The nature and further characters and features of the present invention will be made more clear from the following descriptions made with reference to the accompanying drawings.

### BRIEF DESCRIPTION OF THE DRAWINGS

In the accompanying drawings:
FIG. 1 is a front view, partially in section, of a spinning reel of a first embodiment according to the present invention;
FIG. 2 is a bottom view of the spinning reel shown in FIG. 1;
FIG. 3 is a schematic plan view of a rotational member for the spinning reel of FIG. 1;
FIG. 4 is a schematic plan view of an oscillator gear of the spinning reel of FIG. 1;
FIG. 5 is a diagram of a motion of the spinning reel of FIG. 1 and that of conventional one;
FIG. 6 is an illustration showing a spool of the spinning reel of FIG. 1 around which a fishing line is would up;
FIG. 7 is a plan view of a rotational member of another example for the spinning reel of FIG. 1;
FIG. 8 is an enlarged view of an essential portion of a spinning reel of a second embodiment according to the present invention;
FIG. 9 is also an enlarged view in section of an essential portion of the spinning reel of the second embodiment;
FIG. 10 is a bottom view, partially in section, of a spinning reel of a third embodiment according to the present invention;
FIG. 11 is an enlarged view, partially in section, of an essential portion of a spinning reel of a third embodiment according to the present invention;
FIG. 12A is an enlarged view, partially in section, of an essential portion of a spinning reel of a fourth embodiment according to the present invention, and FIG. 12B is an illustration of one example of an oscillator gear shaft of the spinning reel;
FIG. 13 is an enlarged view, partially in section, of an essential portion of a spinning reel of a fifth embodiment according to the present invention;
FIG. 14 is a sectional view taken along the line XIV-XIV of FIG. 13;
FIG. 15 is an enlarged view, partially in section, of an essential portion of a spinning reel of a sixth embodiment according to the present invention;
FIG. 16 is a sectional view taken along the line XVI-XVI of FIG. 13;
FIG. 17 is an enlarged view, partially in section, of an essential portion of a spinning reel of a sixth embodiment according to the present invention;
FIG. 18 is a side view, partially in section, of a spinning reel of an eighth embodiment according to the present invention;
FIG. 19 is a plan view, partially in section, of the spinning reel of FIG. 18;
FIG. 20 is a view showing an arrangement of a slide mechanism of the spinning reel of the eighth embodiment;
FIG. 21 is a sectional view taken along the line XXI-XXI of FIG. 20;
FIG. 22 is a view showing an arrangement of a slide mechanism of the spinning reel according to a ninth embodiment of the present invention;
FIG. 23 is a sectional view taken along the line XXIII-XXIII of FIG. 22;
FIGS. 24 and 25 are views showing arrangements of other slide mechanism according to the eighth embodiment described above;
FIG. 26 is a view showing an arrangement of a slide mechanism of the spinning reel according to a tenth embodiment of the present invention;
FIG. 27 is a sectional view taken along the line XXVII-XXVII of FIG. 26;
FIG. 28 is a view showing an arrangement of a slide mechanism of the spinning reel according to the eighth embodiment described above;
FIG. 29 is a sectional view taken along the line XXIX-XXIX of FIG. 28;
FIG. 30 is a view showing an arrangement of a slide mechanism of the spinning reel according to the eighth embodiment described above;
FIG. 31 is a view showing an arrangement of a slide mechanism of the spinning reel according to an eleventh embodiment of the present invention;
FIG. 32 is a sectional view taken along the line XXXII-XXXII of FIG. 31;
FIG. 33 is a view showing an arrangement of a slide mechanism of the spinning reel according to the eleventh embodiment described above;
FIG. 34 is a sectional view taken along the line XXXIV-XXXIV of FIG. 33;
FIG. 35 is a view showing an arrangement of a slide mechanism of the spinning reel according to a twelfth embodiment of the present invention;
FIG. 36 is a sectional view taken along the line XXXVI-XXXVI of FIG. 33;
FIG. 37 is a view showing an arrangement of a slide mechanism of the spinning reel according to a thirteenth embodiment of the present invention;
FIG. 38 is a sectional view taken along the line XXXVIII-XXXVIII of FIG. 31;
FIG. 39 is a view showing an arrangement of a slide mechanism of the spinning reel according to a fourteenth embodiment of the present invention;
FIG. 40 is a sectional view taken along the line XXXX-XXXX of FIG. 39;
FIG. 41 is a sectional view of a spinning reel according to a conventional example;
FIG. 42 is an illustration of a spool of the spinning reel of FIG. 41 around which a fishing line is would up; and

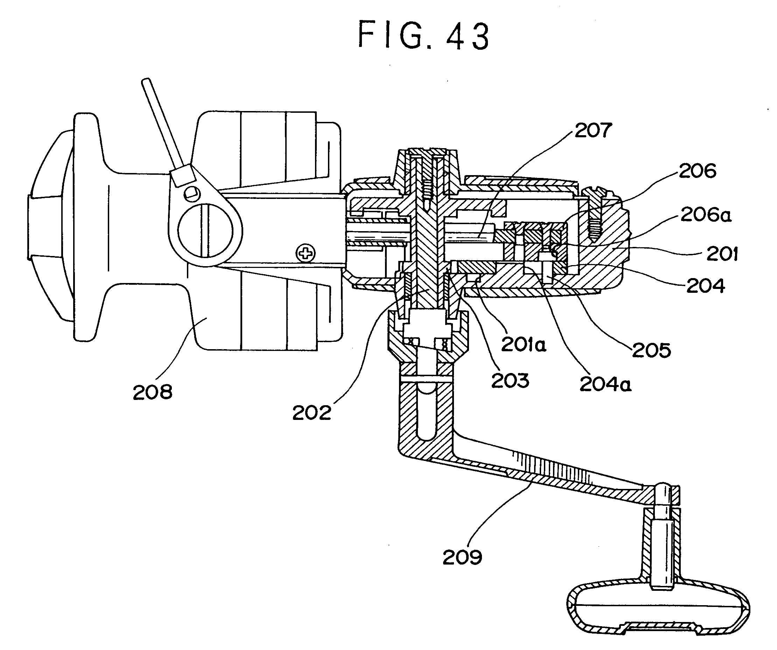

FIG. 43 is a bottom view of the spinning reel of FIG. 41.

### DESCRIPTION OF THE PREFERRED EMBODIMENTS

A first embodiment of the present invention will be described hereunder with reference to the accompanying drawings.

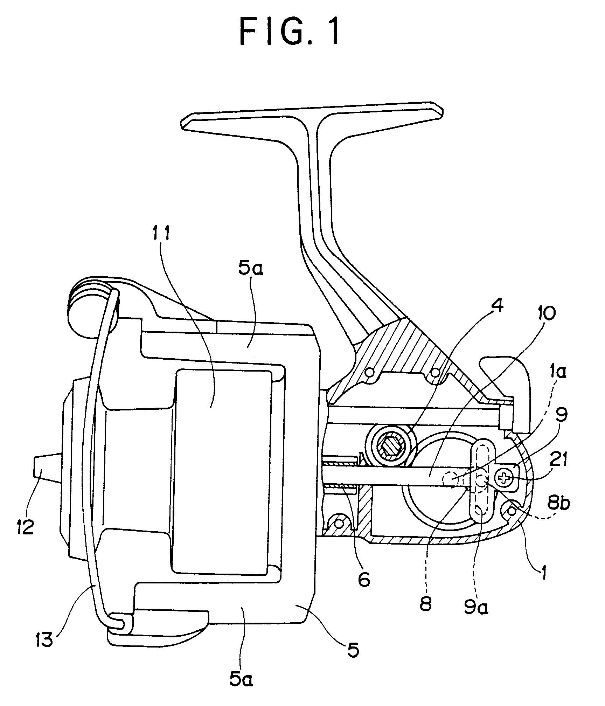

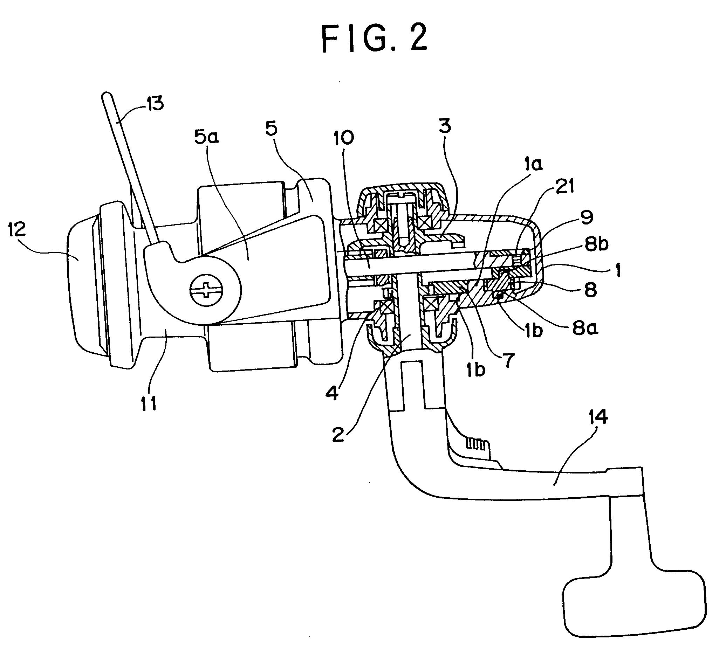

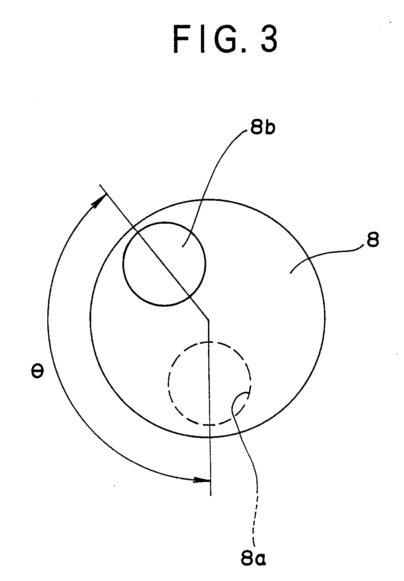

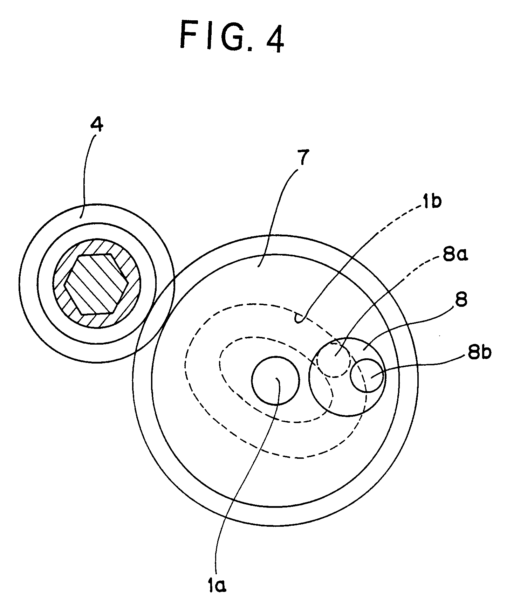

Referring to FIGS. 1 and 2, reference numeral 1 denotes a body casing or reel body of a spinning reel and a handle shaft 2 is mounted inside the body casing 1 to be rotatable. A master gear 3 and a coupling gear 4 are mounted to the handle shaft 2. The master gear 3 is meshed with a pinion 6 connected to a rotational frame 5 of the spinning reel so that the rotational frame 5 becomes rotatable through the rotation of the master gear 3, and the coupling gear 4 is meshed with an oscillator gear 7 held rotatably to a boss portion 1a formed to an inner wall portion of the body casing 1. A rotational member 8, generally in shape of plate, is provided for the oscillator gear 7 to be rotatable, the rotational member 8 having one surface facing the body casing 1 to which a first projection 8a is formed and another one surface to which a second projection 8b is formed with a state shifted from the first projection 8a by an angle θ as shown in FIG. 3. With reference to FIG. 4, the first projection 8a is engaged with a cam groove 1b formed to the inner wall portion of the body casing 1, and as also shown in FIG. 1, the second projection 8b is engaged with a slot 9a formed to an oscillator 7 to be slidable therealong.

As shown, the oscillator 9 is fixed to one end of the spool shaft 10 by means of a screw 21 and a spool 11 is secured to the other end of the spool shaft 10 by means of a drag knob 12. The rotational frame 5 is provided with arm portions 5a, 5a in a projecting manner and a bail arm 13 is provided between these arm portions 5a, 5a. A handle lever 14 is mounted to the handle shaft 2 as shown in Fig. 2.

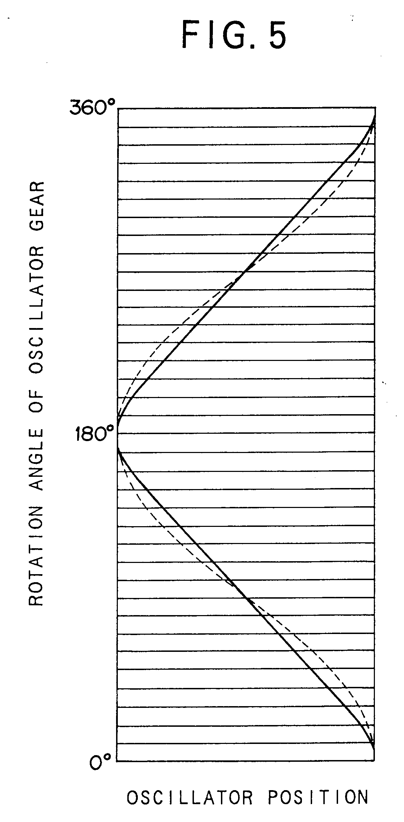

Fig. 5 is a diagram showing the axial movement of the spool 11 in relation to the revolution angle of the oscillator gear and the position of the oscillator, in which the solid line represents the case that the cam groove 1b of this embodiment is formed and the dotted line represents the case that the spinning reel of Fig. 41 is utilized. As can be seen from this figure, according to the present invention, the spool 11 performs substantially the uniform motion along the axial direction thereof (solid line) and the fishing line 15 will not be uniformly wound up around the spinning reel (dotted line).

According to this embodiment, the spinning reel of the structure described above will operate in the following manner.

When the fishing line is wound up around the spool, the handle lever 14 is rotated to thereby rotate the handle shaft 2. According to the rotation of the handle shaft 2, the rotational frame 5 is also rotated through the engagement of the master gear 3 and the pinion 6, and the oscillator gear 4 is then rotated through the engagement with the coupling gear 4. According to the rotation of the oscillator gear 7, the rotational member 8 is rotated around the boss 1a and also revolved in a manner restricted through the engagement of the first projection 8a and the cam groove 1a. The oscillator 9 is moved in the bilateral direction as viewed in Fig. 2 in accordance with the rotation of the rotational member 8 while the second projection 8b of the rotational member 8 moves along the slot 9a of the oscillator 9. According to this movement of the oscillator 9, the spool 11 moves in the axial direction thereof through the spool shaft 10, and then, the fishing line wound up by the bail arm 13 is successively wound up around the spool.

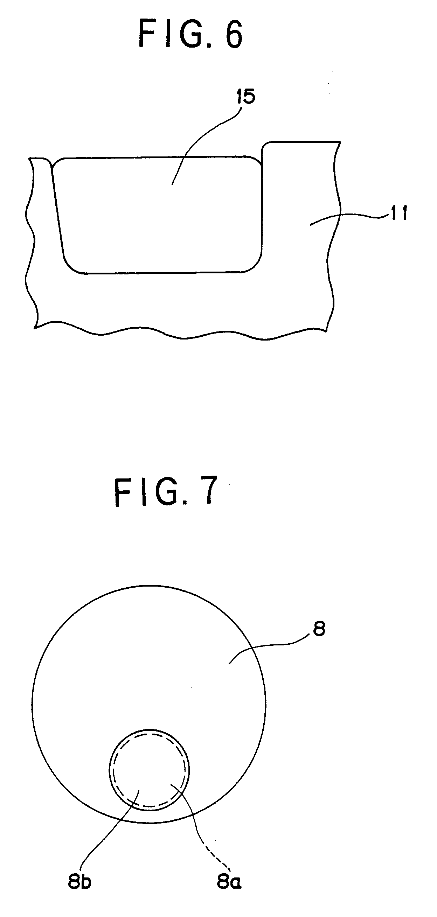

In the above embodiment, the first and second projections 8a and 8b are shifted in angle by θ, but as shown in Fig. 7, the angle may be made as θ = 0. Further, this angle θ may be set to an optional value, and by optionally setting this angle θ, the shape of the cam groove 1b will be changed accordingly. This means that the angle θ and the cam groove 1b can be set so that substantially the uniform reciprocal motion of the spool 11 can be achieved.

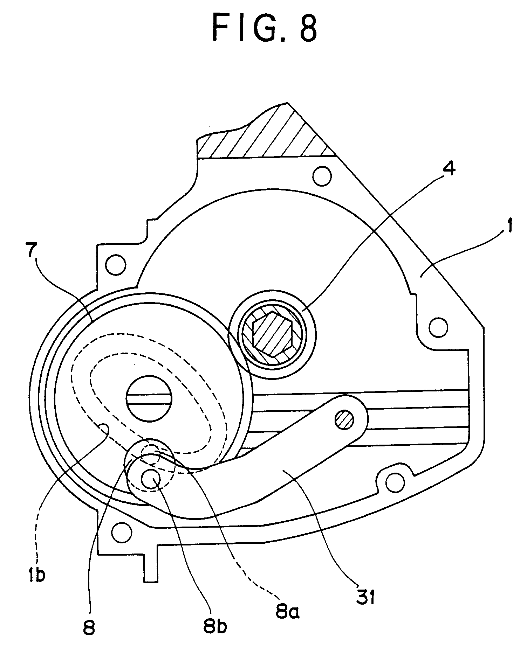

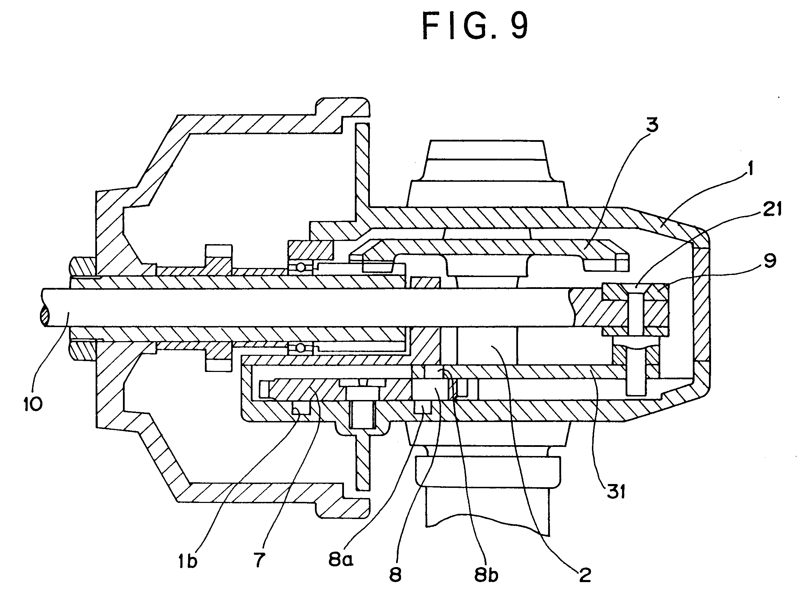

A second embodiment of the present invention will be described hereunder with reference to Figs. 8 and 9, in which Fig. 8 shows an enlarged partially sectional view of a spinning reel and Fig. 9 is a bottom view thereof and in which like reference numerals are added to members or elements corresponding to those of the first embodiment and the details thereof are omitted herein.

With reference to the second embodiment, a link 31 is interposed between the oscillator 9 and the rotational member 8, whereas the second projection 8b is engaged with the rotational member 8 as in the former first embodiment. That is, according to the second embodiment, the rotational member 8 is not necessarily directly engaged with the oscillator 9 in its structure and a structure will be adapted in which the motion of the rotational member 8 transfers to the oscillator 9 through the link 31.

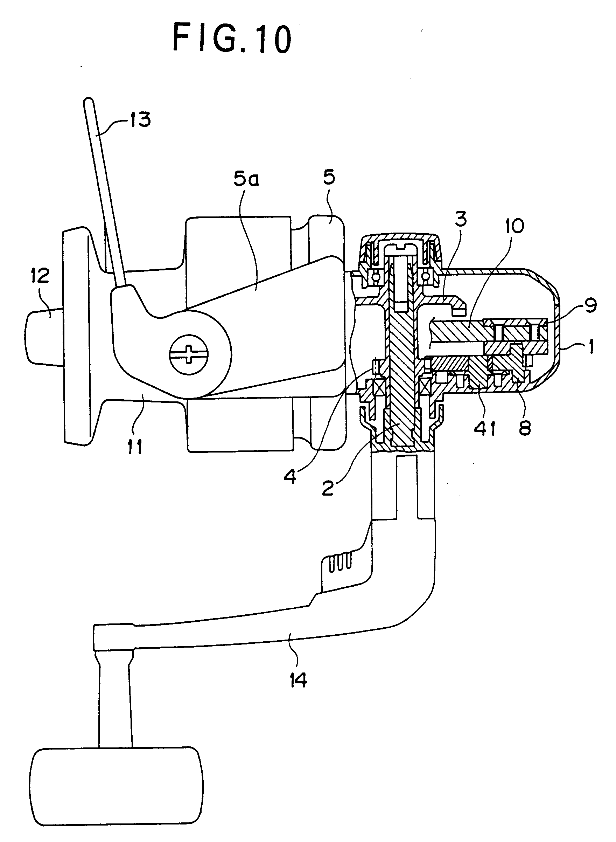

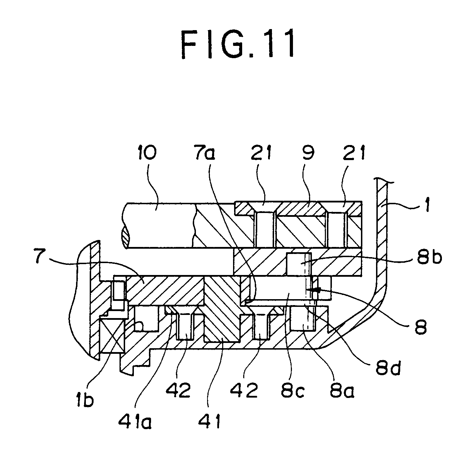

A third embodiment of the present invention will be described hereunder with reference to FIGS. 10 and 11, in which FIG. 10 shows a sectional view of a spinning reel and FIG. 11 is an enlarged view of an essential portion thereof and in which like reference numerals are added to members or elements corresponding to those of the former embodiments and the details thereof are omitted herein.

Referring to FIGS. 10 and 11, an oscillator gear shaft 41, to which an oscillator gear 7 is mounted to be rotatable, is fixed to the body casing 1 of the spinning reel by means of vis 42 and the oscillator gear shaft 41 is provided with a flanged portion 41a. The rotational member 8 provided to the oscillator gear 7 is composed of a body portion 8c to be inserted into the oscillator gear 7, a second projection 8b projecting upward, as viewed, from the body portion 8c, a flanged portion 8d formed below the body portion 8c and a first projection 8a projecting downward from the flanged portion 8d. The flanged portion 8d is engaged with a recessed portion 7a formed to the oscillator gear 7 to limit the upward movement, as viewed in FIG. 11, of the rotational member 8.

In a conventional structure, in order to make strong the engaged structure, it is necessary to make long the engaged length of the body portion and the oscillator gear shaft, and hence, to make thick the body casing 1 or make stout the oscillator gear shaft. According to this embodiment of the present invention, however, in which the oscillator gear shaft 41 is formed with the flanged portion 41a, it is not necessary to make thick a portion of the body casing 1 to which the oscillator gear shaft 41 is mounted, thereby preventing the body casing 1 from making large.

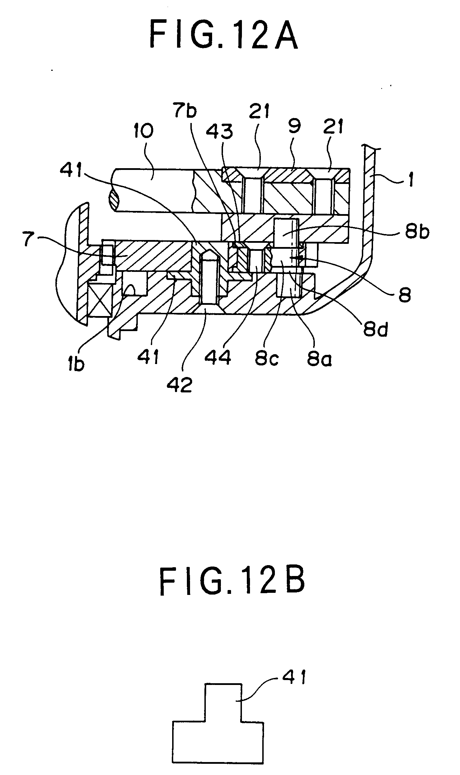

A fourth embodiment of the present invention will be described hereunder with reference to FIG. 12 showing an enlarged view of an essential portion of the spinning reel of the present invention, in which like reference numerals are added to members or elements corresponding to those of the former embodiments and the details thereof are omitted herein.

In this fourth embodiment, a plate member 43 having a diameter larger than that of the body portion 8c of the rotational member 8 is fixed, by means of vis 44, to the upper surface of the body portion 8c, and the plate member 43 is aligned in its position with the recessed portion 7b formed to the oscillator gear 7. According to this structure, the backlash of the rotational member 8 can be surely prevented through the location of the flanged portion 8d and the plate member 43. Further, in this embodiment, since the vis 42 is concentrically disposed with the oscillator gear shaft 41, it is not always necessary to form the flanged portion 41a. The oscillator gear shaft 41 may be formed so as to provide a staged appearance as shown in FIG. 12B.

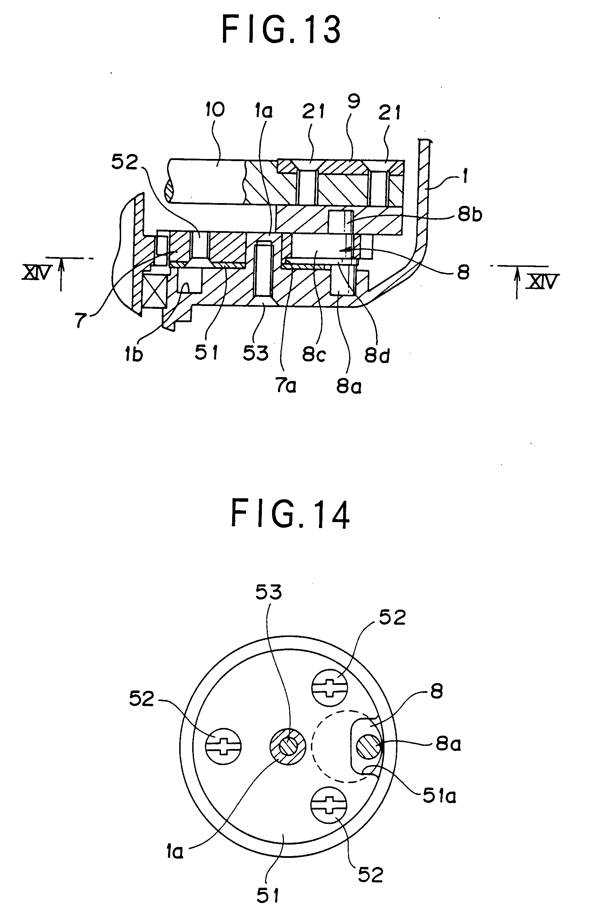

A fifth embodiment of the present invention will be described hereunder with reference to FIGS. 13 and 14, in which FIG. 13 shows an enlarged sectional view of an essential portion of a spinning reel of the present invention and FIG. 14 is a sectional view taken along the line XIV-XIV in FIG. 13 in which like reference numerals are added to members or elements corresponding to those of the former embodiments and the details thereof are omitted herein.

In this fifth embodiment, a plate member 51 is fixed by means of vis 52 in a state that the plate member 51 abuts against the oscillator gear 7 from the side of the flanged portion 8d of the rotational member 8. A vis 53 is inserted concentrically in the boss portion 1a of the body casing 1 to improve the strength of the boss portion 1a. This reinforced structure is most applicable to a case where the body casing 1 is formed of a resin material. Referring to FIG. 14, the plate member 51 is formed with an escape portion 51a for preventing the plate member 51 from interfering with the first projection 8a of the rotational member 8. The flanged portion 8d and the plate member 51 are arranged to the lower side, as viewed, of the oscillator gear 7 in this fifth embodiment, but they may be arranged to the upper side thereof.

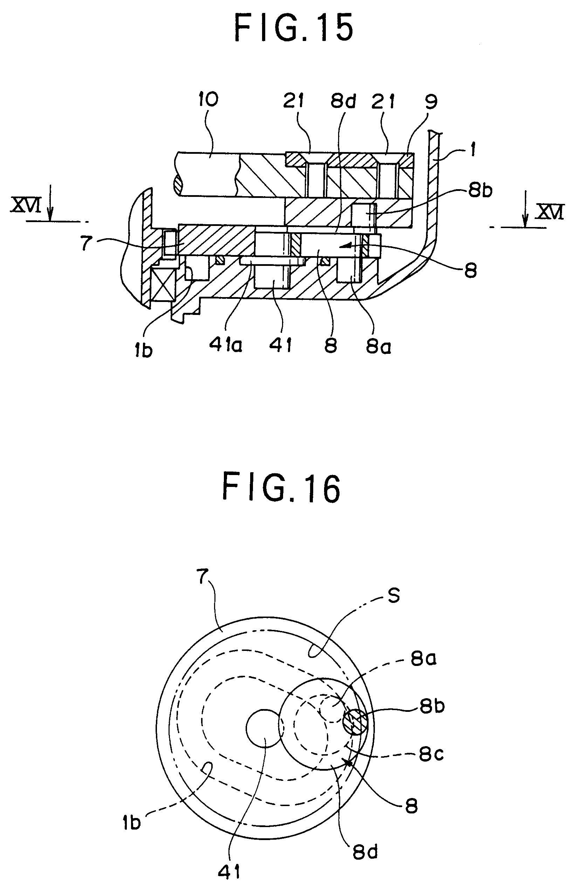

A sixth embodiment of the present invention will be described hereunder with reference to FIGS. 15 and 16, in which FIG. 15 shows an enlarged sectional view of an essential portion a spinning reel of the present invention and FIG. 16 is a sectional view taken along the line XVI-XVI in FIG. 15 in which like reference numerals are added to members or elements corresponding to those of the former embodiments and the details thereof are omitted herein.

In this sixth embodiment, the flanged portion 8d of the rotational member 8 is formed so as to have a diameter relatively larger than that of the body portion 8c, and according to this structure, a portion of the second projection 8b formed to the flanged portion 8d projects outward of a tooth bottom circle S of the oscillator gear 7 as shown in FIG. 16, whereby the stroke of the spool shaft 10 can be made large without making large the diameter of the oscillator gear 7. In this embodiment, although the second projection 8b is formed so as to partially project over the tooth bottom circle of the oscillator gear 7, the flanged portion 8d and the first projection 8a may be arranged, in an alternation, below the body portion 8c as shown.

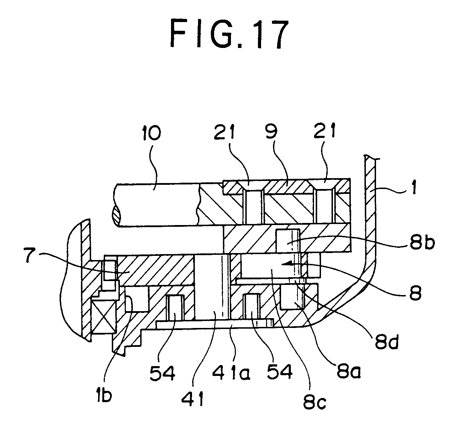

A seventh embodiment of the present invention will be described with reference to FIG. 17 showing an enlarged section of an essential portion of this embodiment, in which like reference numerals are added to members or elements corresponding to those of the former embodiments and the details thereof are omitted herein.

This seventh embodiment has a structure in which the oscillator gear shaft 41 is inserted into the body casing 1 from the outer side thereof and fixed at the outside thereof by means of vis 54.

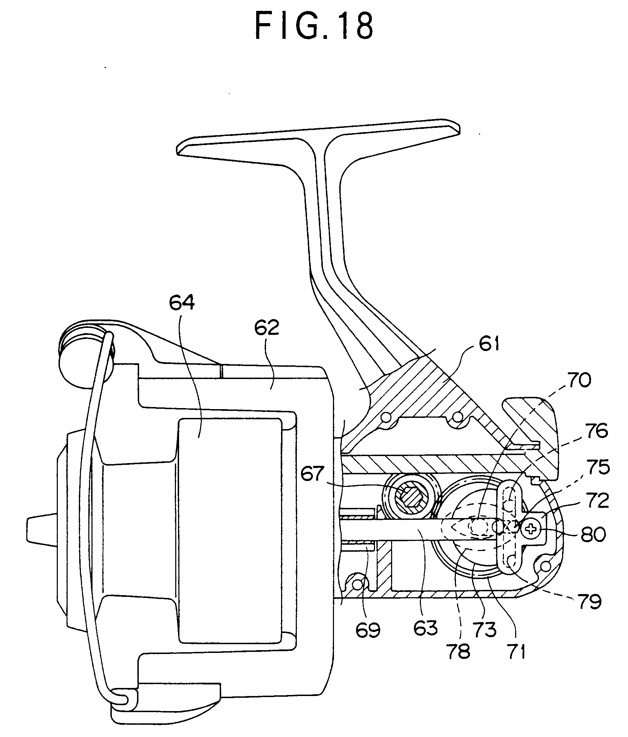

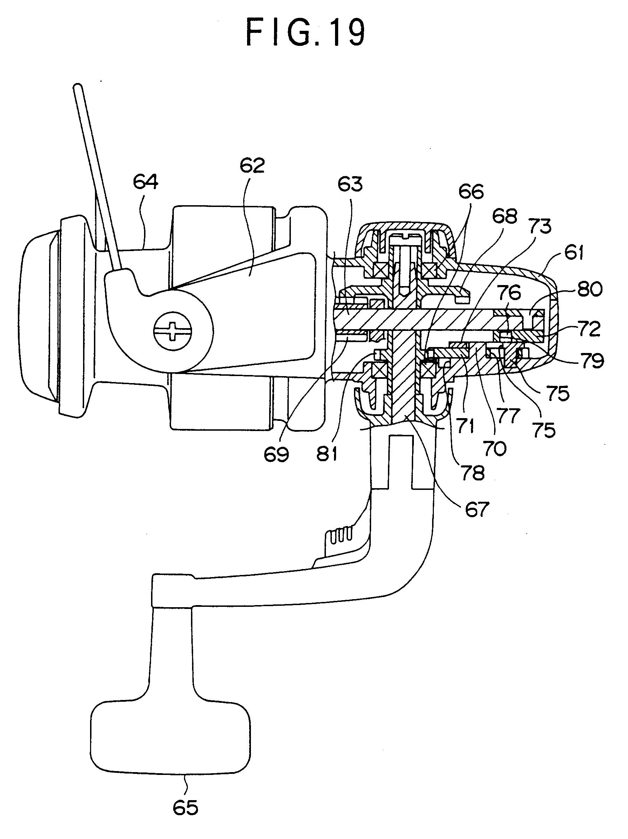

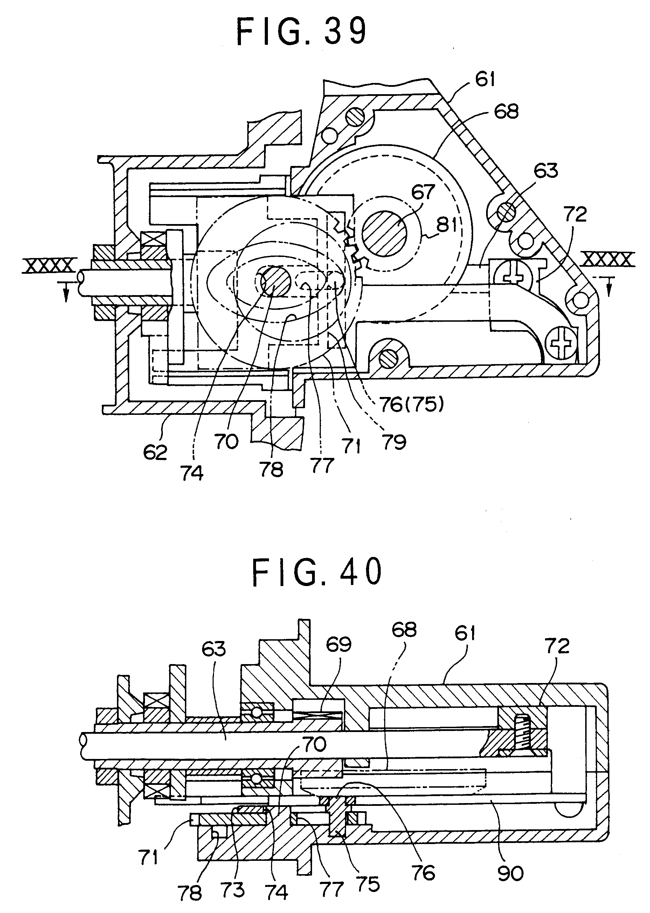

The present invention further includes eighth to fourteenth embodiments which will be described hereinafter with reference to FIGS. 18 to 40.

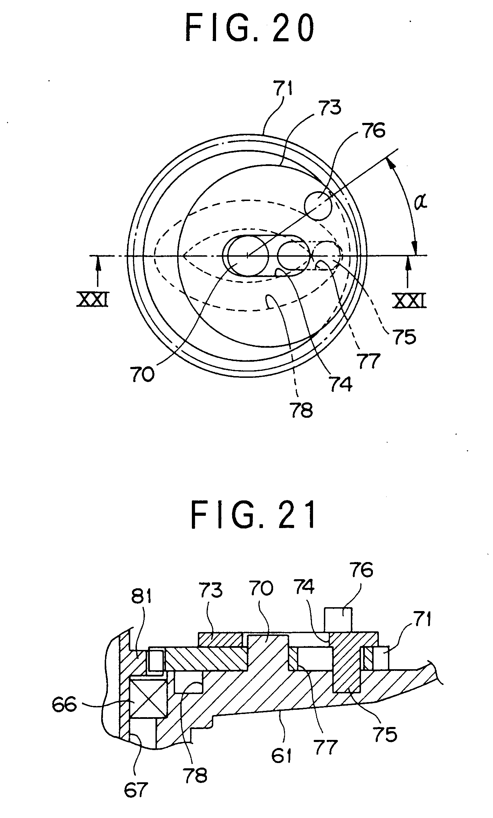

FIGS. 18 and 21 represent the eighth embodiment of a spinning reel according to the present invention. The spinning reel comprises a reel body 61 corresponding to the body casing 1 of the former embodiments; a rotational frame 62 mounted to a front portion of the reel body 61 to be rotatable; a spool shaft 63 fitted to the reel body 61; a spool 64 mounted to the spool body 61 through the spool shaft 63 at its front portion; a handle lever 65 provided for the side surface of the reel body 61; and a transfer mechanism disposed inside the reel body for transferring the rotational motion and the longitudinal swing motion to the rotational frame 62 and the spool 64, respectively, which are converted from the rotational motion of the handle lever 65.

The transfer mechanism includes a transfer means for the rotational frame 62, which comprises a handle shaft 67 supported to the reel body 61 by means of a bearing 66, a master gear 68 fixed to the handle shaft 66 and a pinion 69 mounted to the rotational frame 62 and meshed with the master gear 68. When the handle lever 65 is rotated by a fisherman, the rotation of the handle lever 65 is transferred to the rotational frame 62 through the master gear 68 and the pinion 69.

The transfer mechanism of the structure described above further includes a slide mechanism shown in FIGS. 18 to 21.

That is, the slide mechanism is composed of the handle shaft 67 extending in a bilateral direction of the reel body 61; an oscillator gear 71 mounted to an oscillator gear shaft 70 disposed in parallel with the handle shaft and cooperated in accordance with the rotation of the handle shaft 67; an oscillator 72 mounted to the spool shaft 63 extending in a longitudinal direction of the reel body 1; a rotational member 73 in shape of plate mounted in an overlapped manner with the oscillator gear 71 and the oscillator 72 to be slidable all together; a slot 74 which is formed to the rotational plate 73 and through which the oscillator gear shaft 70 is inserted; first and second projections 75 and 76 provided on bilateral surfaces, respectively, of the rotational plate 73; a slot 77 which is formed to the oscillator gear 71 and through which either one of the first and second projections 75 and 76 is to be inserted; a cam groove 78 having a closed curve contour which is formed to the reel body 61 so as to surround the oscillator gear shaft 70 and to which a front end of the first projection 75 is inserted; and a vertical groove 79 which is formed to the oscillator 72 and to which a front end of the second projection 76 is inserted.

The spool shaft 63 penetrates the central hole of the rotational frame 62 with clearance in the longitudinal direction of the reel and supports the spool 64 at a portion projecting forward of the reel body 61. The oscillator 72 is fixed to the rear end portion of the spool shaft 63 by means of vis 80. The oscillator 72 is formed with a plate piece extending in the vertical direction of the reel body 61 as viewed, and the surface thereof opposing to the rotational plate 73 is made smoothly flat, on which the vertical groove 79 is formed.

The oscillator gear 71 is meshed with a coupling gear 81 secured to the handle shaft 67 so as to rotate around the oscillator gear shaft 70 through the rotation of the handle shaft 67. An inner wall surface of the reel body 61 corresponding to the oscillator gear 71 is formed as a perpendicular wall section, and the oscillator gear 71 rotates while contacting the perpendicular wall section. The slot 77 is formed to the oscillator gear 71 so as to extend in the radial direction thereof from a portion near the oscillator gear shaft 70, and the first projection 75 of the rotational plate 73 is inserted.

An arrangement in which the rotational plate 73 pressed against the perpendicular wall section of the reel body 61 may be adapted, and in such arrangement, the second projection 76 will penetrate the slot 77 of the oscillator gear 71. The slot 77 is formed so as to provide a linear shape, but may provide a curved shape as occasion demands, and it is to be noted that this alternation may be adapted to the following other embodiments except for a twelfth embodiment.

The cam groove 78 formed to the reel body 61 has a closed curve coutour such as an elongated circle, i.e. elliptical shape, having a long axis extending along the longitudinal direction of the reel. It is desired that the cam groove 78 is formed to provide a shape performing a uniform motion of the spool 64.

It is preferred that the rotational plate 73 is a disc having a central portion at which the slot 74 is formed along the diameter of the disc. The first and second projections 75 and 76 formed on the bilateral side surfaces of the rotational plate 73 are each formed preferably as a boss-shaped round pin. Both the projections 75 and 76 are shifted from each other in their angular phases as shown in FIG. 20. That is, the first projection 75 is positioned to a portion of the extension line of the long axis of the slot 74 and the second projection 76 is positioned to a portion on a line which is a formed by rotating the long axis by an angle of α about the oscillator gear shaft 70. In this arrangement, the first projection 75 penetrates the slot 77 of the oscillator gear 71 towards the perpendicular wall section of the reel body 61 and is engaged with the cam groove 78, and the second projection 76 projects towards the oscillator 72 and is engaged with the vertical groove 79.

The bilateral surfaces of the rotational plate 73 are also formed to be smoothly flat and snapped between the oscillator gear 71 and the oscillator 72 in a manner being slidable with no deflection.

According to this eighth embodiment of the structure described above, when the handle lever 65 is rotated, the handle shaft 67 is accordingly rotated and the rotational frame 62 is hence rotated, whereby a rotation torque is transmitted to the oscillator gear 71 through the coupling gear 81. Upon the rotation of the oscillator gear 71, the rotational plate 73 is rotated in synchronism with the oscillator gear 71, while performing a reciprocal swing motion with respect to the oscillator gear 71, in accordance with the engaged condition between the first projection 75 and the slot 77, the engaged condition between the oscillator gear shaft 70 and the slot 74 and the engaged condition between the first projection 75 and the cam groove 78. According to this motion of the rotational plate 73, the second projection 76 of the rotational plate 73 performs a motion having a locus like the closed curve of the cam groove 78. Accordingly, the oscillator 72 engaged with the projection 76 through the vertical groove 79 performs the longitudinal reciprocal motion and the spool 64 also performs the longitudinal reciprocal motion in association with the rotation of the rotational frame 62.

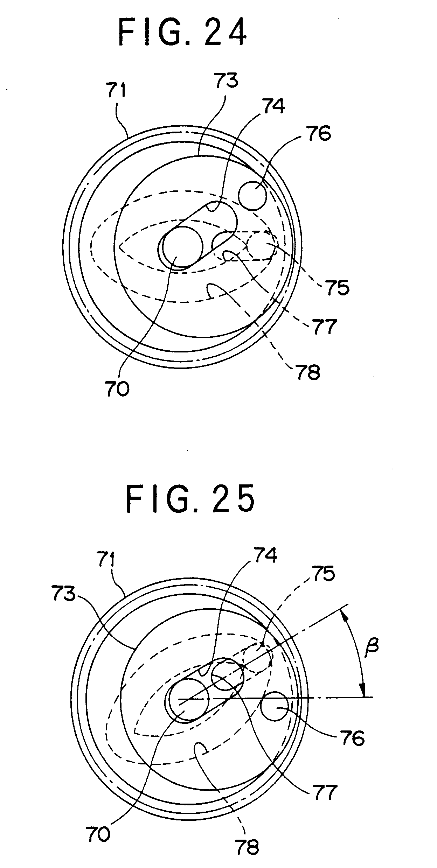

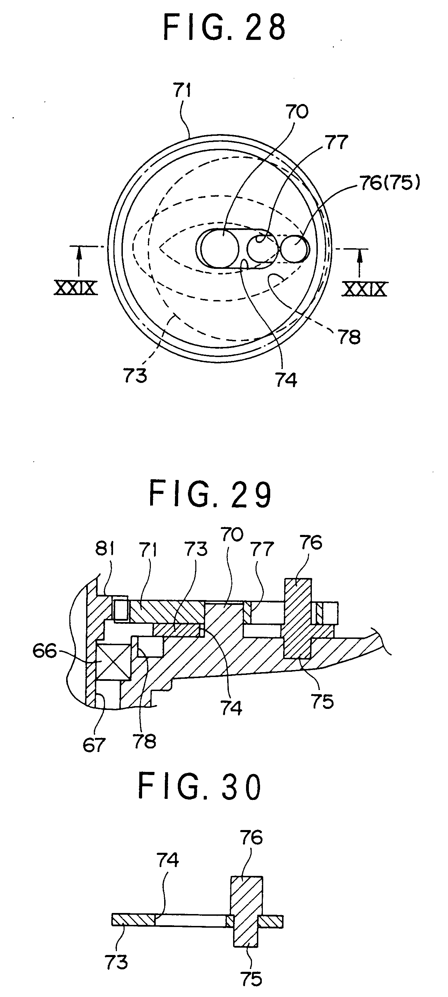

Further, as shown in FIG. 24, the slot 74 may be formed so as to direct towards the second projection. As shown in FIG. 25, it is not necessary that the long axis direction of the cam groove 78 is directed towards the spool shaft direction and the long axis direction may incline by a predetermined angle of β. Furthermore, as shown in FIGS. 28 and 29, the first and second projections 75 and 76 may be formed on the same axis, and in such case, as shown in FIG. 30, the first and second projections 75 and 76 are formed as a single pin which is press fitted into the rotational plate 73 and fixed thereto through a calking operation.

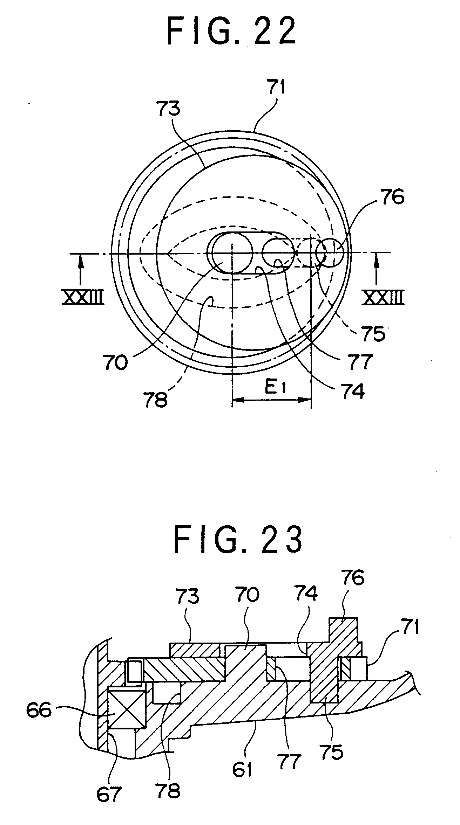

A ninth embodiment of the present invention will be described hereunder with reference to FIGS. 22 and 23. According to the slide mechanism of this ninth embodiment, the second projection 76 is disposed far apart from the oscillator gear shaft 70 in comparison with the first projection 75. That is, the second projection 76 is disposed on the tooth bottom circle of the oscillator 71 or outside thereof. According to this structure, the long axis of the locus of the second projection is made long and, hence, the stroke of the spool is made long, without making large the outer diameter of the oscillator gear 71.

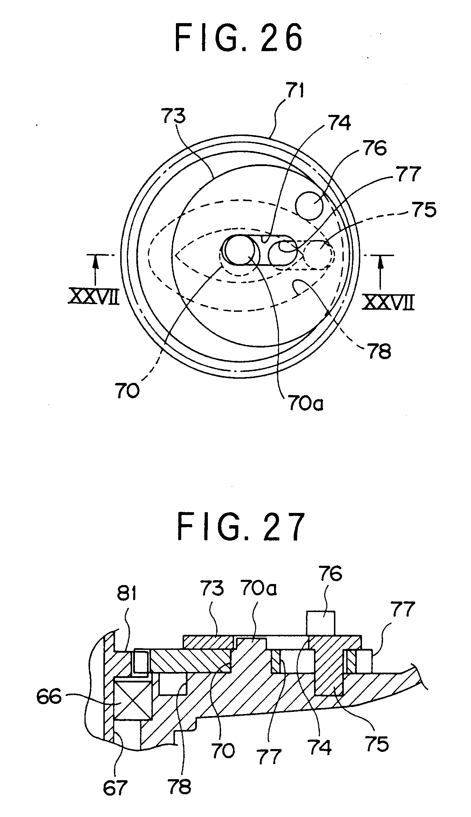

A tenth embodiment of the present invention will be described hereunder with reference to FIGS. 26 and 27. According to the slide mechanism of this embodiment, a shaft 70a having a small diameter is formed on the oscillator gear shaft 70 in a manner eccentric with respect to the oscillator gear shaft 70 so that the small diameter shaft 70a invades into the slot 74 of the rotational plate 73. In such case, the slot 74 of the rotational plate 73 is made small, improving the mechanical strength of the rotational plate 73.

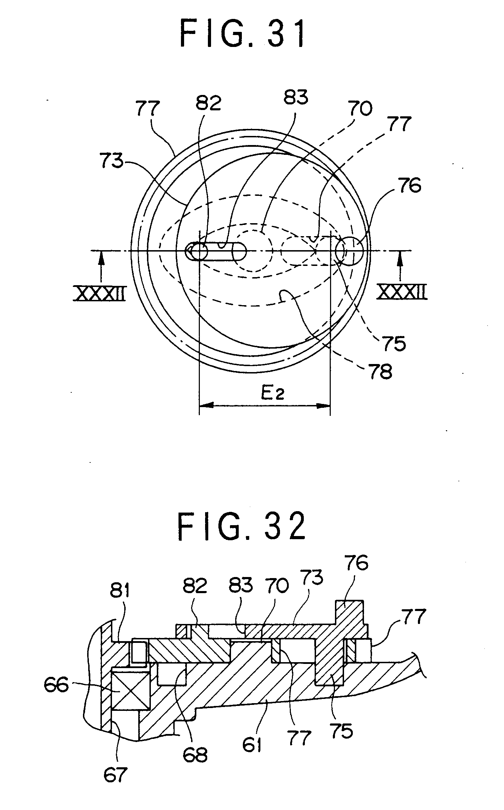

An eleventh embodiment of the present invention will be described hereunder with reference to FIGS. 31 and 32. According to the slide mechanism of this embodiment, a third projection 82 is formed on the side opposite to the slot 77 with the oscillator gear shaft 70 being interposed therebetween, and a further slot 83 is formed on the side opposite to the first and second projections 75 and 76 with the central portion of the rotational plate 73 being interposed therebetween. The third projection 82 and the slot 83 are engaged with each other.

According to this structure, the distance E₂ between the projections 75 and 82 for cooperating the rotational plate 73 with the oscillator gear 71 is made larger than the distance E₁ (FIG. 22) of the eighth embodiment, whereby the backlash between the oscillator gear 71 and the rotational plate 73 can be effectively reduced and the longitudinal reciprocal motion of the oscillator 72 and the spool 64 can be hence made smooth.

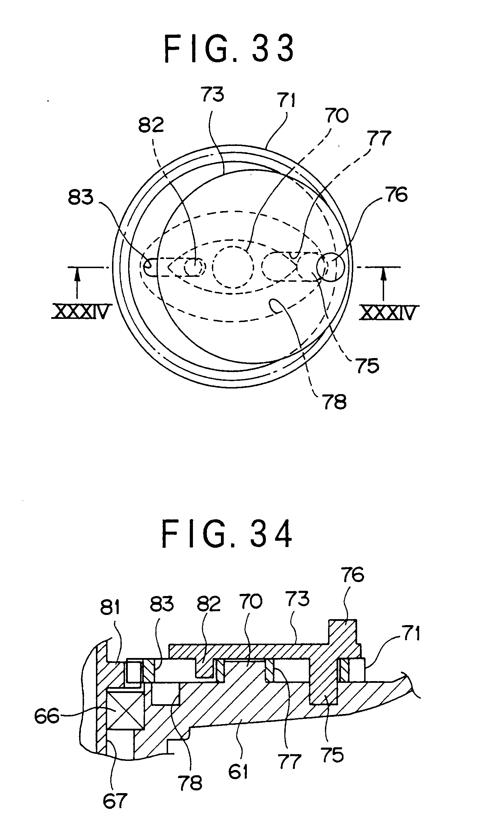

In an alternation, as shown in FIGS. 33 and 34, the third projection 82 may be formed to the rotational plate 73 and the slot 83 to be engaged with the third projection may be formed to the oscillator gear 71, and in such alternation, substantially the same effect as that mentioned above will be achieved. Further, the slots 77 and 83 may be formed so as to provide curved shapes, not linear shape, and it is not always necessary to form the slots 77 and 83 on the same line and they may be formed with an inclined relation.

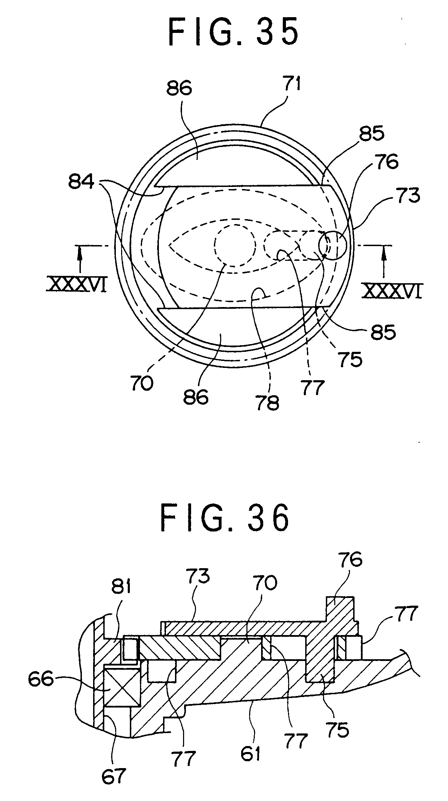

A twelfth embodiment of the present invention will be described hereunder with reference to FIGS. 35 and 36. The slide mechanism of this embodiment is composed of an oscillator gear 71 cooperated in association with the handle shaft 67; the oscillator 72 fixed to the spool shaft 63 extending in the longitudinal direction of the reel body 61; the rotational plate 73 mounted in an overlapped manner with the oscillator gear 71 and the oscillator 72 to be slidable all together; first and second projections 75 and 76 provided on bilateral surfaces, respectively, of the rotational plate 73; a slot 77 which is formed to the oscillator gear 71 and through which the first projection 75 is to be inserted; guide surfaces 84 for sliding formed to the oscillator gear 71 and surfaces 85 to be guided formed to the rotational plate 73, these surfaces being engaged with each other; a cam groove 78 having a closed curve contour which is formed to the reel body 61 so as to surround the oscillator gear shaft 70 and to which a front end of the first projection 75 is inserted; and a vertical groove 79 which is formed to the oscillator 72 and to which a front end of the second projection 76 is inserted.

The above structure is in substitution for the structure of the eighth embodiment in which the oscillator gear shaft 70 is fitted into the slot 74 of the rotational plate 73, and in this twelfth embodiment, a pair of protrusions 86 are formed on a right, as viewed, surface of the oscillator gear 71. The opposing parallel surfaces of the protrusions 86 are formed as guide surfaces 84 with respect to the rotational plate 73, and opposing arc portions of the rotational plate 73 are cut away to provide the surfaces 85 to be guided contacting the guide surfaces 84.

According to this structure, the swing motion of the rotational plate 73 with respect to the oscillator gear 71 is limited by the sliding engagement between the guide surfaces 84 and the guided surfaces 85, so that the backlash between the oscillator gear 71 and the rotational plate 73 can be effectively reduced and the oscillator 72 and the spool 64 can hence achieve the smooth longitudinal swing motion.

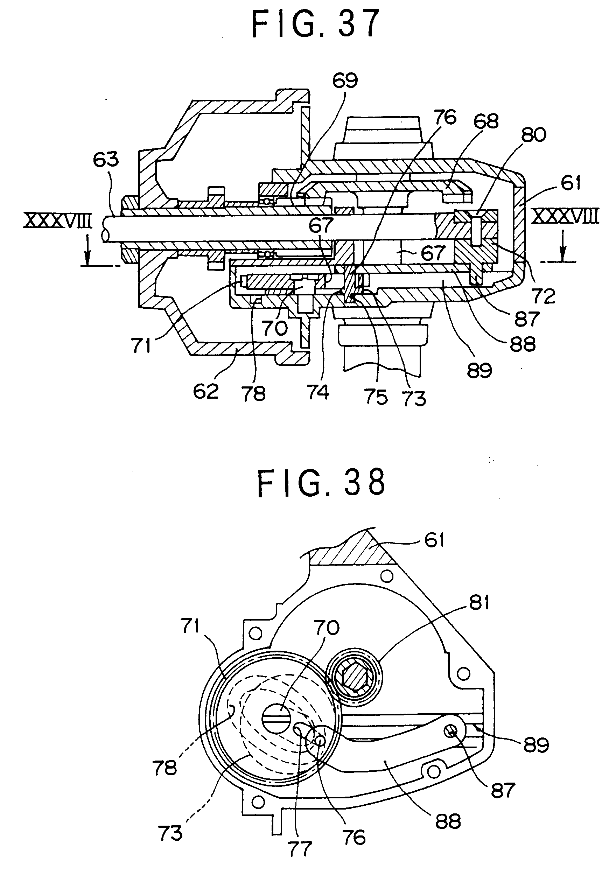

A thirteenth embodiment of the present invention will be described hereunder with reference to FIGS. 37 and 38. According to the slide mechanism of this embodiment, the oscillator gear 71 is disposed in front of the master gear 68, and a pin 87 is located to the oscillator 72 in place of the vertical groove 79. The pin 87 and the second projection 76 are connected by means of a link 88.

A groove 89 is further formed to the reel body 61 for guiding properly the oscillator 72 in the longitudinal direction thereof, and the front end of the pin 87 is inserted into the groove 89. In this embodiment, when the oscillator 71, the second projection 76 moves along the cam groove 78 to thereby operate the link 88, thus the spool 64 performing the reciprocal motion.

A fourteenth embodiment of the present invention will be described hereunder with reference to FIGS 37 and 38. According to the slide mechanism of this embodiment, the oscillator gear 71 is disposed in front of the master gear 68. A slider 90 is secured to the oscillator 72 and the vertical groove 79 is formed to the slider 90. The second projection 76 is inserted into the vertical groove 79. According to this structure, when the oscillator gear 71 is rotated, the second projection 76 moves along the cam groove 78 to thereby move the slider 90 forward or backward, thus, the spool 64 performing the reciprocalmotion.

It is to be noted that the present invention is not limited to the described embodiments and many other changes, modification and combination thereof may be made without departing from the scopes of the appended claims.

## Claims

1. A spinning reel which comprises a reel body casing, a rotational frame member rotatably provided for the reel body casing, a spool shaft provided for the reel body casing to be movable in a rotation axis direction of the rotational frame member, a spool mounted to one end portion of the spool shaft and a handle means operatively connected to the rotational frame member capable of rotating the same, characterized in that an oscillator gear is provided for the reel body casing to be rotated by the handle means, a rotational member is mounted to the oscillator gear to be rotatable, and the rotational member is formed with a first projection engageable with a cam groove formed to an inner surface of the reel body casing and a second projection engageable with an oscillator means secured to another end portion of the spool shaft.

2. A spinning reel according to claim 1, wherein said first and second projections are formed on opposing surfaces of the rotational member, respectively, shifted in angles from each other.

3. A spinning reel according to claim 1, wherein said oscillator means is provided with a slot with which said second projection is engageable.

4. A spinning reel according to claim 1, wherein said oscillator means and said rotational member is operatively connected through a link mechanism.

5. A spinning reel according to claim 1, wherein said oscillator gear is mounted to an oscillator gear shaft secured to the reel body casing, said oscillator gear shaft being provided with a flanged portion in a direction perpendicular to an axial direction of the oscillator gear shaft.

6. A spinning reel according to claim 5, wherein said rotational member is provided with a body portion and a flanged portion and said first projection is formed to the flanged portion.

7. A spinning reel according to claim 6, wherein said flanged portion of the rotational member is engagable with a recessed portion formed to the oscillator gear.

8. A spinning reel according to claim 7, wherein a plate member is secured to said rotational member for preventing the rotational member from falling down from the oscillator gear.

9. A spinning reel according to claim 7, wherein a plate member is secured to said oscillator gear for preventing the rotational member from falling down from the oscillator gear.

10. A spinning reel according to claim 7, wherein a plate member having a diameter larger than that of the body portion of the rotational member is secured thereto and said plate member is positioned in the recessed portion of the oscillator gear.

11. A spinning reel according to claim 1, wherein said reel body casing is integrally formed with a boss portion to which said oscillator gear is rotatably mounted and a metallic pin is fitted to the boss portion.

12. A spinning reel according to claim 11, wherein said reel casing body is formed of a resin material.

13. A spinning reel according to claim 1, wherein at least one of said first and second projections has a portion positioned outwardly apart from a tooth bottom circle of said oscillator gear.

14. A spinning reel which comprises a reel body casing, a rotational frame member rotatably provided for the reel body casing, a spool shaft provided for the reel body casing to be movable in a rotation axis direction of the rotational frame member, a spool mounted to one end portion of the spool shaft and a handle means operatively connected to the rotational frame member capable of rotating the same, characterized in that an oscillator gear is mounted to an oscillator gear shaft to be rotatable in association with a rotation of said handle means, an oscillator is mounted to said spool shaft, a rotational member in shape of plate overlapped with said oscillator gear and said oscillator to be slidable together, said rotational member being provided with a slot into which said oscillator gear shaft is inserted and formed with a first projection and a second projection, respectively, at both surfaces of the rotational member, said oscillator gear being provided with a slot into which either one of said first and second projections is inserted, said reel body casing is formed with a closed curve groove which surrounds the oscillator gear shaft and into which a front end of said first projection is inserted, and said oscillator is formed with a vertical groove into which a front end of said second projection is inserted.

15. A spinning reel according to claim 14, wherein said oscillator has a plate shape having a flat surface facing the rotational member and said vertical groove is formed to said flat surface of the oscillator.

16. A spinning reel according to claim 14, wherein said slot is formed to said oscillator gear so as to extend radially from a portion near said oscillator gear shaft.

17. A spinning reel according to claim 14, wherein said first and second projections are formed on opposing surfaces of the rotational member, respectively, shifted in angles from each other.

18. A spinning reel according to claim 17 wherein said rotational member is a disc provided with a slot at its central portion, said first and second projections are round boss pins, and said first projection is positioned on a line extension of a longitudinal axis of said slot formed to the disc and said second projection is positioned on a line formed by rotating the longitudinal axis about the oscillator gear shaft by a predetermined angle.

19. A spinning reel according to claim 14, wherein a pin is formed on said oscillator gear shaft at a portion eccentric therefrom, said pin engaged with said slot formed to the rotational member.

20. A spinning reel which comprises a reel body casing, a rotational frame member rotatably provided for the reel body casing, a spool shaft provided for the reel body casing to be movable in a rotation axis direction of the rotational frame member, a spool mounted to one end portion of the spool shaft and a handle means operatively connected to the rotational frame member capable of rotating the same, characterized in that an oscillator gear is mounted to an oscillator gear shaft to be rotatable in association with a rotation of said handle means, an oscillator is mounted to said spool shaft, a rotational member in shape of plate overlapped with said oscillator gear and said oscillator to be slidable together, said rotational member being formed with a first projection and a second projection, respectively, at both surfaces of the rotational member, a slot into which said first projection is inserted is formed to said oscillator gear, and a third projection is formed to either one of said rotational member or said oscillator gear and a slot to which said third projection is inserted is formed to another one of said rotational member or said oscillator gear, said reel body casing is formed with a closed curve groove which surrounds the oscillator gear shaft and into which a front end of said first projection is inserted, and said oscillator is formed with a vertical groove into which a front end of said second projection is inserted.

21. A spinning reel which comprises a reel body casing, a rotational frame member rotatably provided for the reel body casing, a spool shaft provided for the reel body casing to be movable in a rotation axis direction of the rotational frame member, a spool mounted to one end portion of the spool shaft and a handle means operatively connected to the rotational frame member capable of rotating the same, characterized in that an oscillator gear is mounted to an oscillator gear shaft to be rotatable in association with a rotation of said handle means, an oscillator is mounted to said spool shaft, a rotational member in shape of plate overlapped with said oscillator gear and said oscillator to be slidable together, said rotational member being formed with a first projection and a second projection, respectively, at both surfaces of the rotational member, a slot into which said first projection is inserted is formed to said oscillator gear, and a guide surface is formed to either one of said rotational member or said oscillator gear and a surface to be guided is formed to another one of said rotational member or said oscillator gear to be engageable with said guide surface, said reel body casing is formed with a closed curve groove which surrounds the oscillator gear shaft and into which a front end of said first projection is inserted, and said oscillator is formed with a vertical groove into which a front end of said second projection is inserted.
